# EUROPEAN PATENT APPLICATION

(11) **EP 2 860 692 A1**
(43) Date of publication of application: **15.04.2015**
(21) Application number: 13187950.4
(22) Date of filing: 09.10.2013
(51) Int. Cl.: G06T 5/00, H04N 5/357

(54) **Adaptive noise filtering**

(71) Applicant: Harvest Imaging bvba, 3960 Bree (BE)
(72) Inventor: Theuwissen, Albert, 3960 Bree (BE)
(74) Representative: Hertoghe, Kris Angèle Louisa

(57) **Abstract**

A system (100) for removing noise from an image comprises an input means (110) for collecting the data. The system also comprises a first processing means (121) for applying a numerical model for distinguishing areas containing high spatial-frequency content and areas containing low spatial-frequency content. The system also comprises a second processing means (122) for filtering the data in the distinguished areas, e.g. by applying an algorithm with a (threshold) parameter adapted for the spatial-frequency range of the content in the corresponding area, whereby stronger filtering is applied to areas with a lower spatial-frequency content and vice versa. The system can also comprise a third processing means (123) for reconstructing a filtered image by combining the filtered data of the different areas.

## Description

### Field of the invention

The invention relates to the field of reducing noise in an image. More specifically it relates to systems and methods for reducing the noise in an image while preserving the edges in the same image.

### Background of the invention

Several techniques exist for digitally removing noise from an image going from standard low-pass filtering, to very clever algorithms that try to preserve edges and details present in the image. Removing the noise from an image by digital filtering often decreases the sharpness of an image as the sharp edges do not pass through the filter algorithm.

Most of the methods apply spatial filtering whereby (weighted) averaging is done of the pixels in the neighbourhood of the pixel where the filtering is applied to. An example of such a filter is a sigma filter. In sigma filtering a pixel value is replaced by averaging some but not all values of the pixels in the neighbourhood of the pixel. In order to prevent edges to be removed from the image the sigma filtering algorithm only takes pixels for which the value is within a range from the current pixel value. However, if by this condition the number of pixels is below a certain number, averaging over all neighbouring pixels is performed. Sigma filtering is described in: Lee, Jong-Sen (1983),"Digital image smoothing and the sigma filter", Computer vision, graphics, and image processing 24 (2): 255-269, CODEN: CVGPDB, ISSN. Lee, Jong-Sen described it as: "This filter is motivated by the sigma probability of the Gaussian distribution, and it smoothens the image noise by averaging only those neighbourhood pixels which have the intensities within a fixed sigma range of the centre pixel. Consequently, image edges are preserved, and subtle details and thin lines such as roads are retained."

In general the following steps are applied when running a sigma filter. For each of the pixels in the image:
- Its greyscale value is taken, i.e. the intensity information of the pixel when only the luminance part of the image is considered, and also the greyscale values of all pixels in a rectangular neighbourhood of the pixel are taken,
- the taken pixel greyscale values are averaged, thus calculating a new greyscale value, but in this calculation only those neighbouring pixels are considered which have a greyscale value differing less than sigma from the greyscale value of the centre pixel,
- the calculated new greyscale value is allocated as the greyscale value for the pixel in the filtered image.

K-Nearest Neighbours filtering is also a filter algorithm which preserves edges in the image. Instead of using a sigma value to decide whether a greyscale value will be taken into account, the K-nearest neighbours are taken, i.e. with greyscale values closest to the greyscale value of the filtered pixel, for calculating the average. This average is then set as the greyscale value for the pixel in the filtered image.

In these filter algorithms the noise is filtered similarly for all areas in the image. Digital filtering of information to kill the noise will also attack the sharpness of the image. Therefore there is still room for systems and methods for filtering the while keeping the sharpness in the image.

### Summary of the invention

It is an object of embodiments of the present invention to provide efficient methods and systems for filtering noise from an image while better preserving the edges in the image, in comparison with standard low-pass filtering.

The above objective is accomplished by a method and device according to embodiments of the present invention.

In a first aspect, the present invention provides a system for removing noise from an image. The system comprises an input means for obtaining image data; a first processing means adapted for decomposing the image for distinguishing areas containing higher spatial frequency content from areas containing lower spatial frequency content, e.g. by applying a model such as e.g. a numerical model; and a second processing means for filtering the data in the distinguished areas by applying an algorithm, for instance a numerical algorithm, with a parameter, for instance a threshold parameter, adapted for the frequency range of the content in the concerned area, whereby stronger filtering is applied to areas with a low spatial frequency content and less filtering is applied to areas with a high spatial frequency content, thus obtaining a filtered image. A system according to particular embodiments of the present invention may furthermore comprise a third processing means for reconstructing the filtered image by combining the filtered data of the different areas.

It is an advantage of embodiments of the present invention that systems are provided that can distinguish areas where a lot of high spatial frequency content is present from areas where the high spatial frequency content is low.

It is an advantage of embodiments of the present invention that systems are provided that apply a strong noise filtering on the areas where limited or no high spatial frequency content is present. In these areas noise will be more visible and therefore it is appropriate to filter it with a stronger filter. Moreover these areas can handle a stronger noise filtering method as substantially no high spatial frequency content is present.

A system according to embodiments of the present invention may furthermore comprise an output means for outputting the filtered image.

In a system according to embodiments of the present invention, the first processing means may be adapted for applying a high-pass or low-pass filtering algorithm to distinguish between areas with a higher spatial frequency content and areas with a lower spatial frequency content. This allows distinguishing between zones where stronger or less severe noise filtering is to be applied. Of course, if a distinction needs to be made between more areas (areas with high frequency content, areas with low frequency content, areas with one or more types of mid frequency content), more than two filtering algorithms may be applied.

The second processing means may be adapted for applying a sigma filter with a threshold value adapted for the frequency range of the content in the area it is applied to. The threshold value may vary between 2 sigma and 4 sigma for low spatial frequency content areas and between 1 sigma and 2 sigma for high spatial frequency content areas.

A system according to embodiments of the present invention may furthermore comprise a controlling means for selecting at least one parameter for use with the first processing means for distinguishing areas and/or at least one parameter for use with the second processing means for filtering data. For instance, the controlling means may be used for selecting at least one parameter of the model, e.g. numerical model, applied by the first processing means and/or at least one parameter of the algorithm, e.g. numerical algorithm, applied by the second processing means. In particular embodiments, the controlling means may be adapted for altering a threshold level of the (numerical) model for distinguishing areas containing higher spatial frequency content and areas containing lower spatial frequency content. In particular embodiments, the controlling means may be adapted for altering a threshold level of the (numerical) algorithm for noise filtering the data depending on the spatial frequency content of the concerned area.

It is an advantage of embodiments of the present invention that a parameter selection means is present that allows altering a threshold level of the model, e.g. numerical model, for distinguishing areas containing high spatial frequency content from areas containing low spatial frequency content. Based on the threshold level, areas will be distinguished onto which stronger filtering will be applied and other areas will be distinguished onto which weaker filtering will be applied. It is an advantage of embodiments of the present invention that the threshold level for distinguishing between the areas can be modified such as to obtain a good, and preferably the best possible, filtering result. This allows to maintain edges where edges in the content are present and to remove noise where less or no edges are present.

In a second aspect, the present invention provides a method for removing noise from an image. The method comprises obtaining data corresponding to an image that needs to be filtered; distinguishing, e.g. by applying a numerical model to the obtained data, areas containing higher spatial frequency content from areas containing lower spatial frequency content; filtering the obtained data in the distinguished areas by applying an algorithm, e.g. a numerical algorithm, with a threshold parameter adapted for the frequency range of the content in the corresponding area, whereby stronger filtering is applied to areas with a lower spatial frequency content and less filtering is applied to areas with a higher spatial frequency content, thus obtaining a filtered image. In embodiments of the present invention, the method may furthermore comprise reconstructing the filtered image by combining the filtered data of the different areas. A method according to embodiments of the present invention may furthermore comprise outputting the filtered image. Alternatively, the step of reconstructing the filtered image can be omitted: if there is a continuous stream of image data, and a constant switch between filtering algorithms is applied, the system may automatically put the output data in the right format.

It is an advantage of embodiments of the present invention that methods are provided that can distinguish areas where a lot of high spatial frequency content is present from areas where the high spatial frequency content is low.

In a method according to embodiments of the present invention, wherein said filtering may comprise applying a sigma filter with a threshold value adapted for the frequency range of the content in the area it is applied to. The threshold value may for instance vary between 2 sigma and 4 sigma for lower spatial frequency content areas and between 1 sigma and 2 sigma for higher spatial frequency content areas.

In a method according to embodiments of the present invention, distinguishing between areas containing higher spatial frequency content and areas containing lower spatial frequency content may comprise applying a high-pass or low-pass filtering algorithm.

It is an advantage of embodiments of the present invention that methods are provided that apply a strong noise filtering on the areas where limited or no high spatial frequency content is present. In these areas noise will be more visible and therefore it is appropriate to filter it with a stronger filter. Moreover these areas can handle a stronger noise filtering method as substantially no high spatial frequency content is present.

It is an advantage of embodiments of the present invention that methods are provided that apply a weak noise filtering on areas where high spatial frequency content is present. In these areas noise will be less visible and therefore it is appropriate to filter it with a weaker filter. In fact, in those regions of the image where a lot of high spatial frequency content is present a strong noise filtering is not needed because the image content is (partly) covering the visibility of the noise. Moreover in these areas edges are present that would be filtered out by a strong filter, thus compromising the sharpness of the image. It is an advantage of embodiments of the present invention that applying weaker filtering on areas with a high spatial frequency content prevents that the spatial frequency content of the image is reduced as well.

A method according to embodiments of the present invention may furthermore comprise controlling the distinguishing and/or the filtering of the obtained data by specifying a parameter to be used in the distinguishing and/or filtering, for instance a parameter of the model used in distinguishing and/or the algorithm used in filtering, depending on the spatial frequency content of the image areas. Controlling the distinguishing and/or the filtering may include controlling of the distinguishing by specifying the threshold level of a numerical model for distinguishing areas containing higher spatial frequency content and areas containing lower spatial frequency content. In embodiments of the present invention, controlling the filtering may comprise the controlling of the filtering of the obtained data by specifying the threshold level of a filtering algorithm, e.g. a numerical algorithm, for filtering the data depending on the spatial frequency content of the concerned area.

It is an advantage of embodiments of the present invention that a parameter selection is available that allows altering a threshold level, e.g. the threshold level of a model, for instance of the numerical model, for distinguishing areas containing high spatial frequency content from areas containing low spatial frequency content. Based on the threshold level, areas will be distinguished onto which stronger filtering will be applied and other areas will be distinguished onto which weaker filtering will be applied. It is an advantage of embodiments of the present invention that the threshold level for distinguishing between the areas can be modified such as to obtain a good, and preferably the best possible, filtering result. This allows to maintain edges where edges in the content are present and to remove noise where less or no edges are present.

It is an advantage of embodiments of the present invention that a parameter selection is available that allows altering a threshold level of the algorithm, e.g. the numerical algorithm, for filtering the data depending on the spatial frequency content of the concerned area.

A method according to embodiments of the present invention may comprise decomposing the obtained image, for instance decomposing the image in a chrominance and luminance part, or decomposing it in a black and white and two colour channels (YCC), or in any other suitable way, before applying filtering to the image. The method may furthermore comprise noise filtering the luminance part of the image using an area dividing step and a filtering step depending on the spatial frequency content of each area.

It is an advantage of embodiments of the present invention that methods and systems are provided that split an image into luminance and chrominance signals and process both separately. As noise in the colour channel (chrominance) is more visible than a similar amount of noise in the luminance channel, this allows an improved, e.g. an optimal processing, i.e. reduction, of noise.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

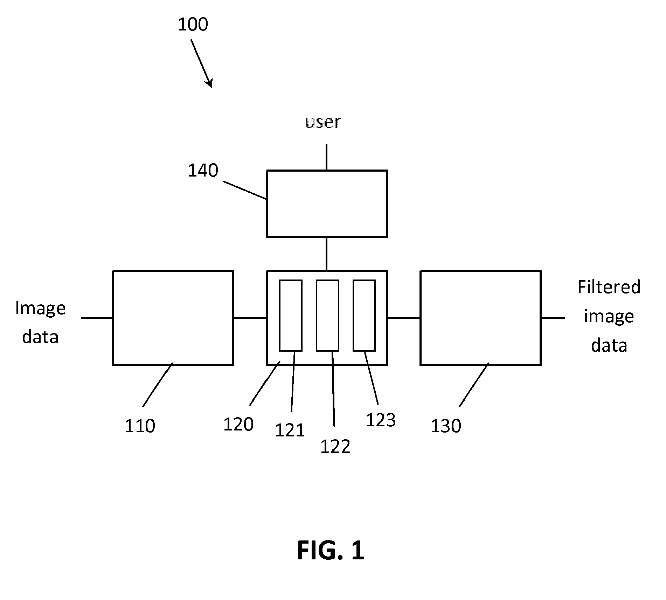

FIG. 1 is a schematic representation of an exemplary system according to an embodiment of the present invention.
FIG. 2 gives a schematic overview of steps in an exemplary method for removing noise from an image while preserving the edges present in the content of the image, in accordance with embodiments of the present invention.
FIG. 3 gives a schematic overview of steps in an exemplary method for removing noise from an image while preserving the edges present in the content of the image in accordance with embodiments of the present invention, whereby in the second step the image is decomposed in a chrominance part and a luminance part.
FIG. 4 illustrates that high spatial frequency components in the image make noise less visible to the human eye.
FIG. 5 illustrates a noise-free image.
FIG. 6 illustrates the image of FIG. 5 to which Gaussian noise with a distribution σ=15 DN is added.
FIG. 7 illustrates a filter map created from the luminance signal.
FIG. 8 illustrates a binarized filter-map of the map of FIG. 7, which is used in some embodiments of the present invention for sigma filtering of the luminance signal FIG. 9 and FIG. 10 illustrates close-ups of different versions of the image.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "content", reference is made to relevant content of an image, not being the noise.

Where in embodiments of the present invention reference is made to "frequency content", reference is made to the spatial frequency components of the content of the image.

Where in embodiments of the present invention reference is made to "area", reference is made to a subpart of the image. In embodiments of the present invention the image may be subdivided in different areas, whereby the areas are selected such that within an area a similar frequency content is present whereby frequency content can be subdivided into high frequency content, low frequency content, and optionally intermediate frequency content. The intermediate frequency content can even be subdivided into narrower subranges. In embodiments of the current invention the filtering technique is adapted depending on the frequencies present in the area which is filtered.

Where in embodiments of the present invention reference is made to "high frequency content", reference is made to spatial frequency components of the content of the image above 60 % of the Nyquist frequency, preferably above 66 % of the Nyquist frequency, more preferably above 70% of the Nyquist frequency, most preferably above 75% of the Nyquist frequency. Where in embodiments of the present invention reference is made to "low frequency content", reference is made to spatial frequency components of the content of the image below 40 % of the Nyquist frequency, preferably below 33% of the Nyquist frequency, more preferably below 30% of the Nyquist frequency, most preferably below 25% of the Nyquist frequency.

Where in embodiments of the present invention reference is made to "high frequency content of an area", reference is made to an area where the spatial frequency components of the content of the considered area are in the higher range of the spatial frequency spectrum. With the higher range of the frequency spectrum is meant frequencies above 60 % of the Nyquist frequency, preferably above 66 % of the Nyquist frequency, more preferably above 70% of the Nyquist frequency, most preferably above 75% of the Nyquist frequency.

Where in embodiments of the present invention reference is made to "low frequency content of an area" reference is made to an area where the spatial frequency components of the content of the considered area are in the lower range of the spatial frequency spectrum. With the lower range of the frequency spectrum is meant frequencies below 40 % of the Nyquist frequency, preferably below 33% of the Nyquist frequency, more preferably below 30% of the Nyquist frequency, most preferably below 25% of the Nyquist frequency.

Where in embodiments of the present invention reference is made to "intermediate frequency content of an area" reference is made to an area where the spatial frequency components of the content of the considered area are in between 40% and 60% of the Nyquist frequency, more preferably in between 33% and 66% of the Nyquist frequency, more preferably in between 30% and 70% of the Nyquist frequency, most preferably in between 25% and 75% of the Nyquist frequency.

Where in embodiments of the present invention reference is made to "a filter-map", reference is made to a map dividing the image into areas with different frequency content. In particular embodiments of the present invention this division may be done by dividing areas into high frequency content areas and low frequency content areas. For each area is indicated whether the area comprises high frequency content or low frequency content. As such it may be a binary map. In embodiments of the present invention the filter applied on the image depends on the value in the binary map. A binary map will therefore be corresponding with two filters. In alternative embodiments of the current invention, besides the high and low frequency content areas, also areas with intermediate frequency content may be identified. In embodiments of the present invention, the applied filter depends on the frequency content of the area. In embodiments of the current invention the number of different filters therefore corresponds with the number of defined frequency ranges or frequency content areas.

Where in embodiments of the present invention reference is made to "greyscale value", reference is made to the intensity information of the pixel when only the luminance part of the image is considered.

Where in embodiments of the present invention reference is made to "DN", reference is made to the digital number of a pixel whereby colours or greyscale values are assigned to each digital number.

Where in embodiments of the present invention reference is made to "adaptive filtering", reference is made to a method to filter noise from an image whereby the filter is adapted depending on the frequency content of the area under consideration or whereby the filter is adapted depending on the pixel content.

Where in embodiments of the present invention reference is made to "stronger filtering", reference is made to a filter with a larger filter/processing kernel in the digital domain than the filter/processing kernel of what is called a weaker filter. Where in embodiments of the present invention reference is made to "weak filtering", reference is made to a filter with a smaller filter/processing kernel in the digital domain than the filter/processing kernel of what is called a strong filter.

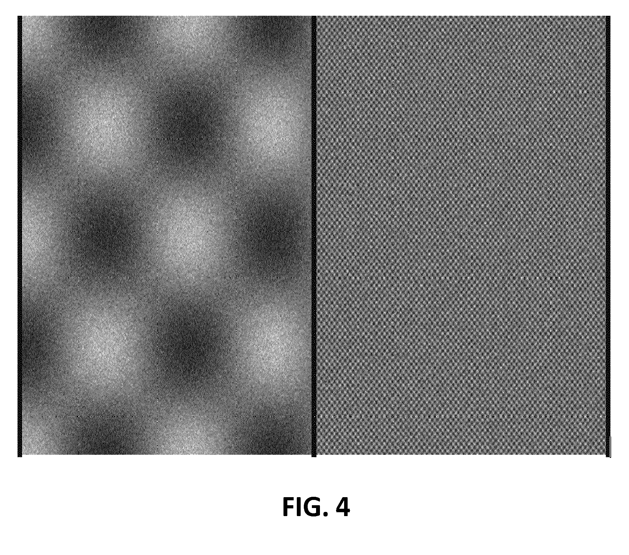

In prior art solutions, in case the noise present in an image needs to be filtered, the high frequency content of the image is reduced as well as the noise content, thus blurring edges. The inventor has now found that in those regions of the image where a lot of high frequency content is present, a strong noise filtering is not needed because the image content is (partly) covering the visibility/perception of the noise. In those regions of the image where no high frequency content is present, the noise will be more visible. FIG.4 illustrates the effect on the noise perception if the image contains high-frequency components.

FIG. 4 has a left and a right hand part. The left hand part has the same amount of noise as the right hand part. On the left hand part, the artificially generated image is a cos(f1 x) cos(f1 y), while on the right hand part it is cos(f2 x) cos(f2 y) whereby f1<< f2. Hence the left hand part has a low frequency along the x axis, while on the right side the image has a much higher frequency. It is clear from simple visual inspection that the noise is much less visible on the right hand side of the figure than on the left hand side thereof.

The invention hence is based on the human perception of noise in images which is governed by some rules. One of these rules being illustrated in FIG. 4. In general the following rules can be distinguished, in case a person is observing (noisy) images:
- Fixed-pattern noise in the spatial domain is easier to observe than temporal noise. That is the reason why noise specs on video are much more relaxed compared to the noise specs on still images. It is to be noted that still images do not any longer have temporal noise, all temporal noise is frozen in the image and is now fixed-pattern noise.
- Pixelated noise is less observable than noise that comes in vertical stripes or horizontal lines.
- Noise in the colour channel (chrominance) is more visible than a similar amount of noise in the luminance channel.
- Perception of noise is strongly depending on the content of the image: more spatial information in the image will lower the visibility of the noise. This rule is illustrated in FIG. 4

Based on the above observations, the present invention provides methods and devices for reducing noise in images.

In a first aspect, the present invention relates to a system 100 for filtering noise from an image while preserving the edges in the image. The system 100 according to embodiments of the present invention comprises an input means 110 for obtaining image data; a first processing means 121 for processing the obtained data by applying a numerical model on the obtained data, thereby distinguishing the image in areas containing high frequency content and areas containing low frequency content; a second processing means 122for filtering noise from the data whereby a threshold in the filter algorithm allows to specify how much the noise will be reduced, the threshold parameter being adapted for the frequency range of the content in the concerned area, whereby a stronger filtering is applied to areas with a low frequency content and less filtering is applied to areas with a high frequency content; a third processing means 123 for reconstructing a filtered image by combining the filtered data of the different areas; and an output means 130 for outputting the resulting filtered image. The first processing means 121, the second processing means 122 and the third processing means 123 may be combined in a single processing means 120. The first processing means 121, the second processing means 122 and the third processing means 123 may be separate sub-parts of a processing means 120, or they may all consist out of the same processing means 120. Alternatively, the functionality of two processing means can be combined together in a single processing means, while the third processing means is kept separate.

In particular embodiments of the present invention, the system 100 may have a further processing means for splitting the image to be filtered into a chrominance and a luminance part.

In particular embodiments of the present invention, the system also may comprise a controlling means 140 for selecting parameters of the numerical model and/or the numerical algorithm. The parameters may be set based on an input, for instance a user input. In particular embodiments of the present invention one of the parameters may be a threshold level to decide whether a certain area of the image contains high frequency content or low frequency content. In certain embodiments of the present invention this threshold value may vary between 1 sigma and 3 sigma or more preferably around 2 sigma. In some embodiments of the present invention one of the parameters may be a parameter adapted for setting or altering a threshold level of the numerical algorithm for filtering the data depending on the frequency content of the concerned are. The threshold level identifies how strong the filtering will be applied on a certain area. Areas with a low frequency content can handle more filtering than areas with a high frequency content and moreover applying less filtering on areas with a high frequency content will better preserve the edges in the image. The threshold for filtering areas with a high frequency content may vary between 1 sigma and 2 sigma . The threshold for filtering areas with a low frequency content may vary between 2 sigma and 4 sigma. A larger threshold value advantageously allows more pixels to participate in the filtering.

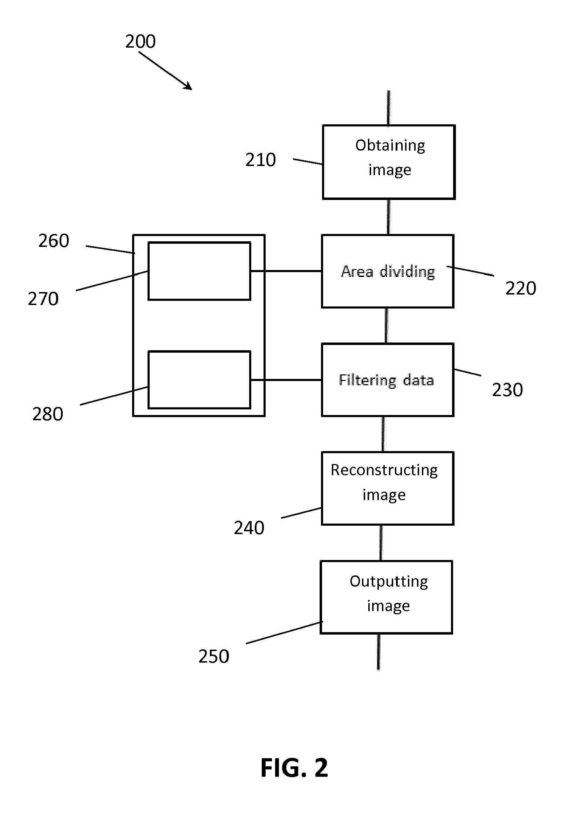

In a second aspect, the present invention provides a method 200, an example of which may be as illustrated in FIG. 2.
- In a first step 210, data relating to an image to be filtered is obtained. Obtaining image data may include, the present invention not necessarily being limited thereto, receiving image data as input by a user, reading image data from a storage device, capturing image data, e.g. by means of a camera.
- In a next step 220, the obtained image data is processed whereby the image data is inspected and the image is divided into areas having high-frequency components and areas having low-frequency components. At least two areas are distinguished from one another. Hereto, the image data may be divided into an array of image areas, and for each area the average image content in terms of frequency components is determined. The area is then classified high frequency content or low frequency content. The array may be a regular or an irregular array. Alternatively, rather than dividing the image based on an array of areas, different areas may be distinguished based on image content. A threshold value may be used for determining whether a zone contains high frequency or low frequency content. In particular embodiments of the present invention, the area dividing step 220 can be implemented using a low pass filter or a high pass filter dividing the image into areas having a low frequency content and areas having a high frequency content: image content which passes the low pass filter has low frequency content; image content which does not pass the low pas filter has high frequency content, or vice versa. In embodiments of the current invention the low pass filter has a cut-off frequency around 1/3 of the Nyquist frequency. In embodiments of the current invention the high pass filter has a cut-off frequency of around 2/3 of the Nyquist frequency. The cut-off frequency determines whether content is classified as high frequency content or as low frequency content.
- In a next step 230 noise is filtered from the image whereby in the areas as determined in step 220 having high-frequency components a weak filtering method is applied and whereby in the areas as determined in step 220 having low-frequency components a stronger filtering method is applied. In embodiments of the present invention, the filtering step 230 can be implemented using any suitable filter, for instance a sigma filter, a KNN (k-Nearest Neighbour) filter, a Gaussian filter or any suitable other sort of low-pass filter. In such cases where for the filtering a sigma filter is used, the threshold used for areas with a low frequency content may for instance vary between 2 sigma and 4 sigma. The threshold used for areas with a high frequency content may for instance vary between 1 sigma and 2 sigma.
- After filtering the image, in a next (optional) step 240 the image may be reconstructed by assembling the filtered areas to a complete noise-reduced image.
- In the last step (250) the image is output to the external world, e.g. is presented to a user or to an application.

A method according to particular embodiments of the present invention may include a step 260 for controlling the parameters of the area dividing and filtering steps 220 and 230. In some embodiments of the present invention the control step 260 may include a step 270 for controlling application of the area dividing step 220 on the obtained data by specifying the threshold level of the numerical model for distinguishing areas containing high frequency content and areas containing low frequency content. In some embodiments of the present invention, the control step 260 may include a step 280 for controlling the filtering of the obtained data by specifying the threshold level of the numerical algorithm for filtering the data depending on the frequency content of the concerned area.

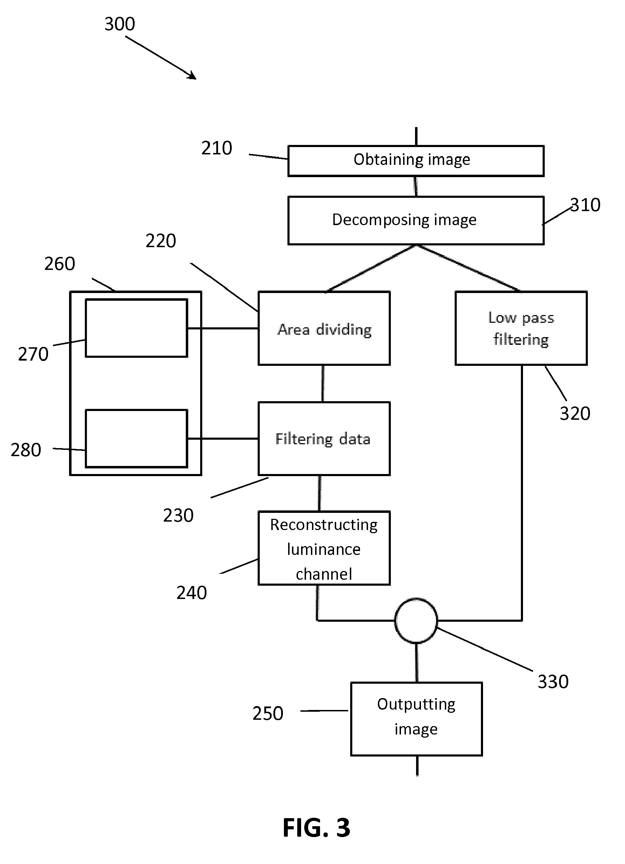

In a further aspect of the present invention, a method 300 is provided as illustrated in FIG. 3.
- In a first step 210, data relating to an image to be filtered is obtained. Obtaining image data may include, the present invention not necessarily being limited thereto, receiving image data as input by a user, reading image data from a storage device, capturing image data, e.g. by means of a camera.
- In a second step 310, the noisy image is decomposed in luminance and chrominance signals. The luminance and chrominance signals will be processed separately. This may be done because noise in the colour channel (chrominance) is more visible than a similar amount of noise in the luminance channel. Hence, preferably, noise in the complete chrominance channels may be filtered out, while in the luminance channel noise in areas with low frequency content should be filtered out more than noise in areas with high frequency content.
- In a next step 320, the chrominance signals are low pass filtered.
- Thereafter, or simultaneously, noise in the luminance channel is dealt with. In an area dividing step 220, the luminance portion of the image is divided into areas with high frequency content (containing a lot of details) and areas with low frequency content (containing less details). In some embodiments of the present invention this area division may be done by means of a high-pass filtering and/or low-pass filtering on the luminance signal. The threshold for distinguishing between high frequency content and low frequency content is varying between 1/3 and 2/3 of the Nyquist frequency, more preferably it is about 50 % of the Nyquist frequency. The result of this method is a filter-map. Such filter map is a 2D representation of frequencies in the spatial domain, represented by grey values. The filter map may be binarized so as to obtain a binary filter map.
- The filter-map, for instance the binary filter map, generated by the dividing step220 may then be used as an input for a filtering step 230. If the area has high-frequency content in the spatial domain, weaker noise filtering is applied during the filtering step 230, and if the area has low-frequency content in the spatial domain, stronger noise filtering is applied during the filtering step 230. The noise filtering may be implemented using any suitable filtering technique. In some embodiments of the present invention the noise filtering is implemented using a sigma filter which is location-dependent, based on the frequency content in the image.
- In the next (optional) step 240 the different noise filtered areas may be combined to complete the filtered luminance channel of the image.
- In the next step 330, after both the filtering in the chrominance channel and the filtering in the luminance channel have been applied, the low-noise luminance channel is joined with the low-noise chrominance channel to reconstruct the filtered image.
- The filtered image may then be output to the external world, e.g. may be presented to a user or to an application.

### ILLUSTRATION

An example of illustration is shown hereunder.

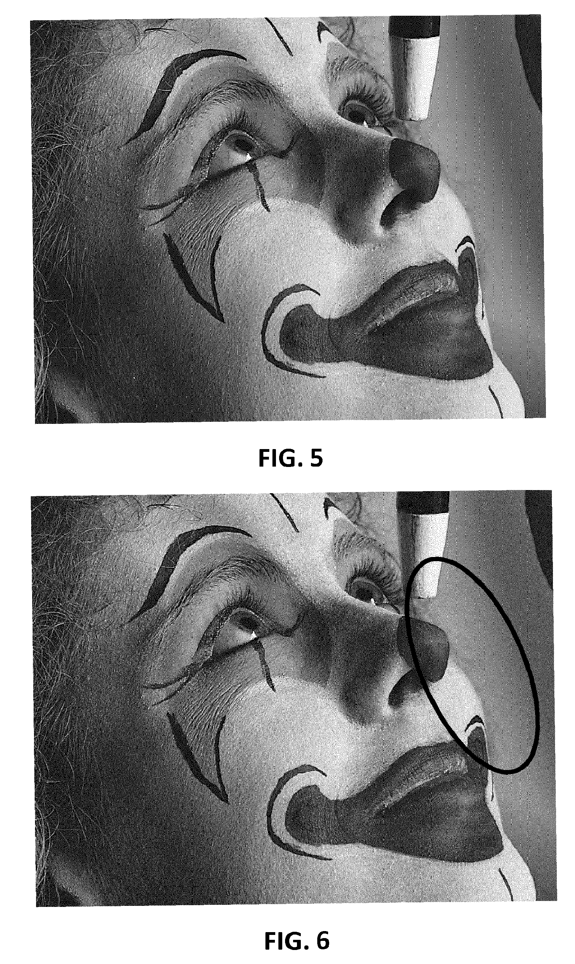

In order to have an image comprising noise, noise is added to a noise-free image as in FIG.5 (©Kodak). The added noise is Gaussian distributed, with in the example illustrated σ=15 DN. Of course, in typical applications noise will not have to be added, but noisy images will be obtained in some way. The combination of the noise-free image with the added noise is illustrated in FIG. 6. Especially in the region next to the face, but not limited to that region, noise becomes visible.

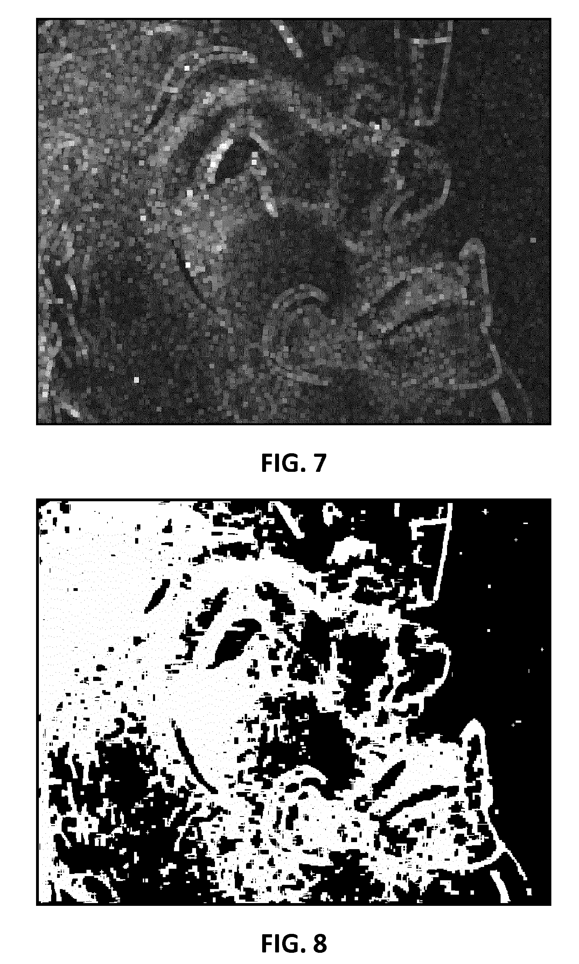

Next the noise is filtered in the digital domain. There are many suitable noise filtering methods available. In the example illustrated here, the noisy image of FIG. 6 is first decomposed in the luminance and two chrominance signals. Next the chrominance signal is straight-forward low-pass filtered, in the example illustrated by a 7 x 7 LP-filter. In the example illustrated, the luminance signal is filter with a so-called sigma filter. The strength of the sigma filter is determined by a pre-defined, e.g. user-defined, threshold. If the threshold is set high, more pixels are included in the filtering and the noise is reduced much stronger, if the threshold is set low, less pixels are included in the filtering and the noise is reduced much less. In the algorithm illustrated here, after the chrominance filtering and before the luminance filtering, the algorithm is seeking for areas in the image that contain a lot of details (high frequency content). This may be done by means of a high-pass filtering on the luminance signal. After some simple processing, the output is as illustrated in FIG. 7. Areas that are black refer to areas in the original image with only low frequencies in the spatial domain. Areas that are white refer to areas in the original image with primarily high frequencies in the spatial domain.

In order to use this filter map for the sigma-filtering of the luminance signal, it is first binarized. The result is as illustrated in FIG. 8. For the dark area, with less variation in the spatial domain, the threshold for the sigma filter is set, in this example, to 15 DN (= σ) and for the light area, with more variation in the spatial domain, the threshold for the sigma filter is set to 30 DN (= 2*σ). After the adaptive filtering, e.g. sigma filtering, of the noise in the luminance channel, the low-noise luminance is joined with the low-noise chrominance signals to reconstruct the image.

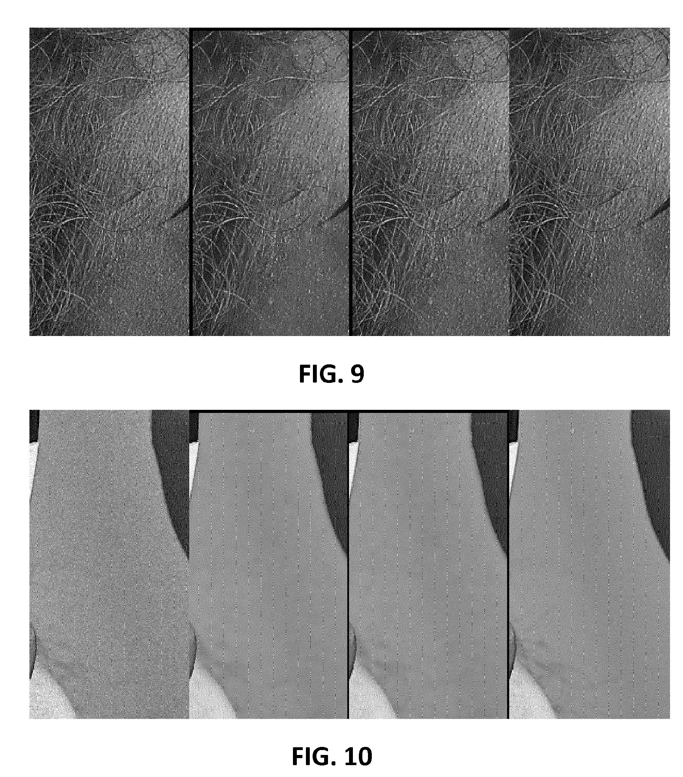

For illustration purposes, in FIG. 9 and FIG. 10, enlargements are shown, for two details in the image (the top left where a lot of detail is present, and the top right where uniform areas are present), of respectively :
- the original image with noise (FIG. 6),
- the noisy image after filtering with a non-adaptive sigma filter, i.e. a sigma filter which is constant for the complete image, as known from the prior art,
- the noisy image after filtering with the location-depending sigma filter, as in accordance with embodiments of the present invention, and,
- the original image without noise (FIG. 5).

FIG. 9 illustrates the effect of the extra sharpness the algorithm according to embodiments of the present invention brings: see the difference between the two middle images, the noisy image after prior art filtering and the noisy image after filtering in accordance with embodiments of the present invention, respectively.

FIG. 10 illustrates that the algorithm also keeps its performance compared to the original image. Edges of main objects are very well maintained.

## Claims

1. A system (100) for removing noise from an image, the system (100) comprising
- an input means (110) for obtaining image data,
- a first processing means (121) adapted for decomposing the image for distinguishing areas containing higher frequency content from areas containing lower frequency content, and
- a second processing means (122) for filtering the data in the distinguished areas by applying an algorithm with a parameter adapted for the frequency range of the content in the concerned area, whereby stronger filtering is applied to areas with a low frequency content and less filtering is applied to areas with a high frequency content, thus obtaining a filtered image.

2. A system (100) according to claim 1, furthermore comprising a third processing means (123) for reconstructing the filtered image by combining the filtered data of the different areas.

3. A system (100) according to any of the previous claims, furthermore comprising an output means (130) for outputting the filtered image.

4. A system (100) according to any of the previous claims, wherein the first processing means is adapted for applying a high-pass or low-pass filtering algorithm to distinguish between areas with a higher frequency content and areas with a lower frequency content.

5. A system (100) according to any of the previous claims, wherein the second processing means (122) is adapted for applying a sigma filter with a threshold value adapted for the frequency range of the content in the area it is applied to.

6. A system (100) according to any of the previous claims, the system furthermore comprising a controlling means (140) for selecting at least one parameter for use with the first processing means and/or at least one parameter for use with the second processing means.

7. A system (100) according to claim 6, wherein the controlling means (140) is adapted for altering a parameter of the numerical algorithm for noise filtering the data depending on the frequency content of the concerned area.

8. A method (200, 300) for removing noise from an image, the method (200, 300) comprising
- obtaining (210) data corresponding to an image that needs to be filtered,
- applying a numerical model to the obtained data for distinguishing (220) areas containing higher frequency content from areas containing lower frequency content, and
- filtering (230) the obtained data in the distinguished areas by applying a numerical algorithm with a parameter adapted for the frequency range of the content in the corresponding area, whereby stronger filtering is applied to areas with a lower frequency content and less filtering is applied to areas with a higher frequency content" thus obtaining a filtered image.

9. A method according to claim 8, furthermore comprising reconstructing (240) the filtered image by combining the filtered data of the different areas.

10. A method (200, 300) according to any of claims8 or 9, wherein said filtering (230) comprises applying a sigma filter with a threshold value adapted for the frequency range of the content in the area it is applied to.

11. A method (200, 300) according to any of claims 8 to 10, wherein distinguishing between areas containing higher frequency content from areas containing lower frequency content comprises applying a high-pass or low-pass filtering algorithm.

12. A method (200, 300) according to any of claims 8 to 11, furthermore comprising controlling (260) the distinguishing (220) and/or the filtering (230) of the obtained data by specifying a parameter of a model used in distinguishing and/or a parameter of an algorithm used in filtering, depending on the frequency content of the image areas.

13. A method (200, 300) according to claim 12, wherein controlling (260) the distinguishing (220) and/or the filtering (230) includes controlling (270) of the distinguishing (220) by specifying the threshold level of the model for distinguishing areas containing higher frequency content and areas containing lower frequency content.

14. A method (200, 300) according to any of claims 12 or 13, wherein controlling (260) the filtering (230) comprises the controlling (280) of the filtering (230) of the obtained data by specifying the threshold level of the algorithm for filtering the data depending on the frequency content of the concerned area.

15. A method (300) according to any of claims 8to 14, the method comprising decomposing (310) the obtained image in a chrominance and luminance part before applying filtering to the image and noise filtering the luminance part of the image using an area dividing step (220) and a filtering step (230) depending on the frequency content of each area..
